# EUROPÄISCHE PATENTANMELDUNG

(11) **EP 2 199 053 A1**
(43) Veröffentlichungstag der Anmeldung: **23.06.2010**
(21) Anmeldenummer: 08022212.8
(22) Anmeldetag: 19.12.2008
(51) Int. Cl.: B29C 45/14, B29C 37/00, B60J 7/00

(54) **Dachelement für Fahrzeuge sowie Verfahren zur Herstellung eines flächigen Dachelements für Fahrzeuge**

(71) Anmelder: ArvinMeritor GmbH, 63128 Dietzenbach (DE)
(72) Erfinder: Niesner, Tobias, 38542 Leiferde (DE); Langhoff, Hans Joachim, 38518 Gifhorn (DE); Ludwig, Matthias, 38159 Vechelde (DE); Beck, Herbert, 38302 Wolfenbüttel (DE); Melzian, Fred, 38486 Kusey (DE)
(74) Vertreter: Prinz & Partner

(57) **Zusammenfassung**

Ein Dachelement (10) für Fahrzeuge weist einen flächigen Polyurethankörper (26) auf, der ein mechanisch stabiles Tragelement bildet, sowie eine Beschichtung (16), die zur Verbesserung der Kratzfestigkeit auf den Polyurethankörper (26) aufgebracht ist.

Das Verfahren zur Herstellung eines solchen Dachelements (10) für Fahrzeuge umfasst folgende Schritte:
a) Es werden relativ zueinander bewegbare Formwerkzeuge (12, 14) bereitgestellt;
b) Auf eine Oberfläche wenigstens eines der Formwerkzeuge (12, 14) wird eine Beschichtung (16) mit hoher Kratzfestigkeit aufgetragen;
c) Die Formwerkzeuge (12, 14) werden relativ zueinander bewegt, bis sie einen Hohlraum (24) einschließen, der im Wesentlichen der Form des späteren flächigen Dachelements (10) entspricht;
d) Der Hohlraum (24) wird mit einem Polyurethanmaterial (26') gefüllt, welches in den Formwerkzeugen (12, 14) zu einem Polyurethankörper (26) aushärtet und mit der Beschichtung (16) eine Haftverbindung eingeht;
e) Die Formwerkzeuge (12, 14) werden relativ zueinander bewegt, bis der beschichtete Polyurethankörper (26) als fertiges Dachelement (10) entnommen werden kann.

## Beschreibung

Die Erfindung betrifft ein Dachelement für Fahrzeuge sowie ein Verfahren zur Herstellung eines solchen Dachelements.

Dachelemente von Fahrzeugen können entweder fest montiert oder beweglich, insbesondere verschieblich und/oder verschwenkbar, an der Fahrzeugkarosserie angebracht sein, wobei das Dachelement z.B. transparent ausgebildet ist.

Aus Gründen des geringeren Gewichts, der einfacheren Formgebung sowie der besseren Einstellbarkeit von Materialeigenschaften sind im Stand der Technik bereits zahlreiche Fahrzeug-Dachelemente offenbart, die nicht aus Glas, sondern aus Kunststoff bzw. einem Kunststoffverbundmaterial hergestellt sind. Als statisch tragendes Material kommen dabei in der Regel Polycarbonat (PC) oder Polymethylmethacrylat (PMMA) sowie Kombinationen davon zum Einsatz.

In der DE 10 2006 049 621 A1 ist z.B. ein transparentes, mehrlagiges und flächiges Bauteil dargestellt, welches vorzugsweise als Scheibe in einem Fahrzeug verwendet wird. In einer der beschriebenen Ausführungsformen ist diese Scheibe dreilagig aufgebaut, aus einer unteren, statisch tragenden Lage aus Polycarbonat, einer oberen Lage aus einer Polymethylmethacrylatfolie und einer dazwischenliegenden, dünnen Lage aus thermoplastischen Polyurethan (TPU) zur Verbindung der oberen und unteren Lage.

Aufgabe der Erfindung ist es, ein Dachelement für Fahrzeuge zu schaffen, welches hinsichtlich der üblichen Anforderungen an ein Dachelement geeignete, vorzugsweise in weiten Bereichen einstellbare Materialeigenschaften aufweist und sich mit möglichst geringem Aufwand herstellen lässt.

Erfindungsgemäß wird die Aufgabe gelöst durch ein Dachelement für Fahrzeuge, mit einem flächigen Polyurethankörper, der ein mechanisch stabiles Tragelement bildet, und einer Beschichtung, die zur Verbesserung der Kratz-festigkeit auf den Polyurethankörper aufgebracht ist. Die Erfindung beruht auf der Erkenntnis, dass aus der Polyurethanchemie mittlerweile sogenannte hochtransparente Glasklar-Polyurethane bekannt sind, die als stabiles Tragelement verwendet und mit geringem Aufwand zu einem Fahrzeug-Dachelement, insbesondere einem transparenten Fahrzeug-Dachelement weiterverarbeitet werden können. Diese Glasklar-Polyurethane wurden ursprünglich für den Fahrzeuginnenbereich, beispielsweise zur Wurzelholzumspritzung einer Armaturentafel entwickelt. Es hat sich jedoch herausgestellt, dass sich die Glasklar-Polyurethane, die üblicherweise nicht als Polyurethanschaum, sondern als Polyurethan-Kompaktmaterial vorliegen, hervorragend für Dachelemente, insbesondere transparente Fahrzeug-Dachelemente eignen, da sich relevante Materialeigenschaften wie Elastizität, Schlagzähigkeit, Witterungsbeständigkeit, Farbechtheit oder ähnliches durch die Zusammensetzung des Polyurethanmaterials in den gewünschten Bereichen einstellen lassen.

Lediglich zur Verbesserung der Kratzfestigkeit ist zumindest auf einer späteren Außenseite des Polyurethankörpers eine entsprechende Kratzfest-Beschichtung, vorzugsweise ein Lack, aufgebracht.

In einer besonders bevorzugten Ausführungsform ist der Polyurethankörper im Wesentlichen vollständig mit der Beschichtung überzogen. Dies ist besonders vorteilhaft, wenn die Beschichtung einerseits einen guten Verbund mit dem Polyurethanmaterial eingeht, sich jedoch andererseits gut von der Oberfläche eines Formwerkzeugs ablösen lässt und somit auch als Trennmittel fungiert.

In weiteren Ausführungsformen des Dachelements ist wenigstens ein Anbauteil und/oder wenigstens ein Einbauteil vorgesehen, das bzw. die zumindest teilweise im Polyurethankörper aufgenommen ist bzw. sind.

Vorzugsweise ist der flächige Polyurethankörper eine gekrümmte Schale. Dadurch lässt sich das Dachelement an die Karosserie- oder Dachform des Fahrzeugs anpassen, was sich optisch vorteilhaft auswirkt.

Die Erfindung betrifft ferner ein Verfahren zur Herstellung eines flächigen Dachelements für Fahrzeuge mit folgenden Schritten:
a) Es werden relativ zueinander bewegbare Formwerkzeuge bereitgestellt;
b) auf eine Oberfläche wenigstens eines der Formwerkzeuge wird eine Be-schichtung mit hoher Kratzfestigkeit aufgetragen;
c) die Formwerkzeuge werden relativ zueinander bewegt, bis sie einen Hohlraum einschließen, der im Wesentlichen der Form des späteren flächigen Dachelements entspricht;
d) der Hohlraum wird mit einem Polyurethanmaterial gefüllt, welches in den Formwerkzeugen zu einem Polyurethankörper aushärtet und mit der Beschichtung eine Haftverbindung eingeht;
e) die Formwerkzeuge werden relativ zueinander bewegt, bis der beschichtete Polyurethankörper als fertiges Dachelement entnommen werden kann.

Durch dieses Verfahren kann mit geringem Fertigungsaufwand ein Dachelement hergestellt werden, welches alle wichtigen Anforderungen, z.B. bezüglich Schlagzähigkeit, Witterungsbeständigkeit, Oberflächenqualität etc. erfüllt. Dabei entsteht ein qualitativ hochwertiges, insbesondere transparentes Dachelement, das aufgrund des einfachen Herstellungsverfahrens sehr preiswert angeboten werden kann.

In einer Ausführungsvariante wird nach Schritt a) ein Trennmittel auf eine Oberfläche wenigstens eines der Formwerkzeuge aufgebracht. Dadurch lässt sich das fertige Dachelement später einfacher aus den Formwerkzeugen entnehmen. Besonders bevorzugt weist jedoch bereits die Kratzfest-Beschichtung Trennmitteleigenschaften auf, sodass idealerweise kein separates Trennmittel notwendig ist, falls der Polyurethankörper im Wesentlichen vollständig mit der Kratzfest-Beschichtung überzogen ist. Ist der Polyurethankörper nur bereichsweise, beispielsweise nur auf einer späteren Fahrzeugaußenseite, mit der Kratzfest-Beschichtung überzogen, so müssen lediglich die übrigen Bereiche, beispielsweise eine Seite, die später einem Fahrzeuginnenraum zugewandt ist, mit einem separaten Trennmittel versehen werden.

Um die Gefahr von Oberflächenbeeinträchtigungen durch Staub oder Schmutz zu minimieren, kann sich der Hohlraum im Schritt c) im Wesentlichen in einer vertikalen Ebene erstrecken, sodass das flächige Dachelement "stehend" gefertigt wird. Sinngemäß und näherungsweise gilt dies auch für gekrümmte Dachelemente. Eine stehende Fertigung bedeutet mit anderen Worten, dass sich eine Bauteildicke des flächigen Polyurethankörpers bei dessen Herstellung im Wesentlichen waagerecht erstreckt. Am einfachsten und effektivsten lässt sich eine Ablagerung von Staub oder Schmutz an den zu beschichtenden Werkzeugoberflächen vermeiden, wenn die Formwerkzeuge bereits im Schritt a) vertikal ausgerichtet sind. Alternativ ist jedoch auch denkbar, dass die Kratzfest-Beschichtung auf Formwerkzeuge aufgetragen wird, die sich zunächst im Wesentlichen in einer horizontalen Ebene erstrecken und erst im Schritt c) so gedreht werden, dass sich der Hohlraum im Wesentlichen in einer vertikalen Ebene erstreckt.

Bei "stehender" Fertigung des Dachelements wird das Polyurethanmaterial bevorzugt im Bereich eines unteren Hohlraumendes zugeführt, sodass der Hohlraum im Schritt d) von unten nach oben gefüllt wird. Dadurch ist eine vorteilhafte Entlüftung des Hohlraums gewährleistet und die Wahrscheinlichkeit von unerwünschten Lufteinschlüssen im Dachelement minimiert.

Insbesondere können nach Schritt a) oder b) Einbau- und/ oder Anbauteile in die Formwerkzeuge eingelegt werden, welche in Schritt d) wenigstens abschnittsweise vom Polyurethanmaterial umschlossen werden. Anbauteile sind in diesem Zusammenhang beispielsweise Metallprofile, Gewindestangen oder ähnliches, die eine Montage des Dachelements an der Fahrzeugkarosserie ermöglichen oder vereinfachen. Anbauteile ragen in der Regel aus dem späteren Polyurethankörper heraus oder schließen bündig mit dem Polyurethankörper ab, wohingegen sogenannte Einbauteile komplett eingebettet, d.h. vollständig von Polyurethanmaterial umschlossen sind. Typische Beispiele für Einbauteile sind in diesem Zusammenhang Antennen, Verstärkungselemente, insbesondere Stahlprofile, die randseitig angeordnet sind und die Biegesteifigkeit des Dachelements erhöhen, aber auch Solarzellen, mit deren Hilfe sich das flächige Dachelement funktional sehr einfach zu einem Solarmodul erweitern lässt. Ferner können als Einbauteile auch intransparente, meist schwarze Folienelemente vorgesehen sein, die in der Regel randseitig angeordnet sind, um bei transparenten Dachelementen z.B. Montageprofile abzudecken, so dass diese von einer Fahrzeugaußenseite nicht sichtbar sind. Alternativ lassen sich derartige Sichtschutzstreifen jedoch auch nachträglich auf das Dachelement aufsprühen oder aufdrucken.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 einen schematischen Schnitt durch Formwerkzeuge bei geöffneter Werkzeugform;
- Figur 2 einen schematischen Schnitt durch Formwerkzeuge bei geschlossener, innenseitig beschichteter Werkzeugform;
- Figur 3 einen schematischen Schnitt durch Formwerkzeuge bei geschlossener Werkzeugform, nach einer Befüllung mit Polyurethanmaterial; und
- Figur 4 einen schematischen Schnitt durch ein erfindungsgemäßes Dachelement für Fahrzeuge, welches nach einem erfindungsgemäßen Verfahren hergestellt wurde.

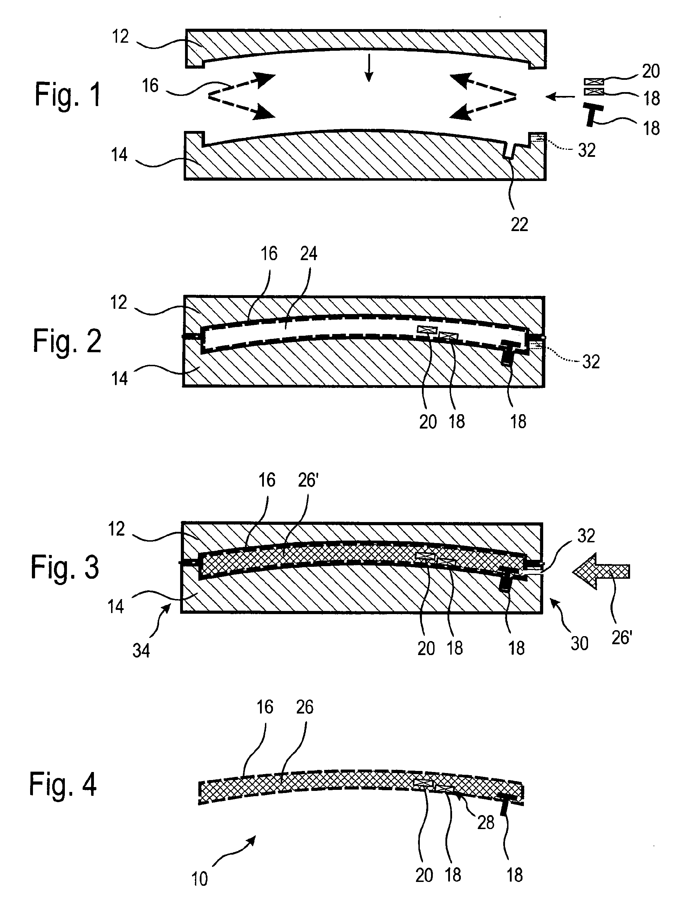

Die Figuren 1 bis 4 zeigen schematisch den Ablauf des erfindungsgemäßen Verfahrens zur Herstellung eines flächigen Dachelements 10 für Fahrzeuge.

Gemäß Figur 1 werden zunächst zwei Formwerkzeuge 12, 14 bereitgestellt, die relativ zueinander bewegbar sind. Die Formwerkzeuge 12, 14 sind in Figur 1 soweit voneinander beabstandet, dass sie eine sogenannte offene Werkzeugform bilden. Somit kann auf einfache Art und Weise eine Beschichtung 16 mit hoher Kratzfestigkeit auf eine Oberfläche wenigstens eines der Formwerkzeuge 12, 14 aufgetragen werden. Vorzugsweise wird diese Kratzfest-Beschichtung 16 auf die gesamte Oberfläche der beiden Formwerkzeuge 12, 14 aufgebracht, die später mit einem eingespritzten Polyurethanmaterial 26' (vgl. Figur 3) in Verbindung kommt. Dabei bildet die Kratzfest-Beschichtung 16 mit der Oberfläche der Formwerkzeuge 12, 14 zwar eine Haftverbindung aus, die vorzugsweise allerdings so schwach ist, dass sich die Beschichtung 16 am Ende des Verfahrens einfach von den Formwerkzeugen 12, 14 lösen lässt. Falls die Beschichtung 16 nicht auf die gesamte Oberfläche der beiden Formwerkzeuge 12, 14 aufgebracht wird, die später mit dem eingespritzten Polyurethanmaterial 26' (vgl. Figur 3) in Verbindung kommt, so wird wenigstens auf die Oberflächenabschnitte ohne Beschichtung 16 ein separates Trennmittel aufgesprüht. Soll das Polyurethanmaterial 26' z.B. lediglich auf einer späteren Außenseite des Dachelements 10 die Kratzfest-Beschichtung 16 aufweisen, so wird nur die (gesamte) Oberfläche des entsprechenden Formwerkzeugs 12, 14 mit der Beschichtung 16 versehen, während auf das andere Formwerkzeug 14, 12 lediglich ein Trennmittel aufgebracht wird.

Bei geöffneter Werkzeugform gemäß Figur 1 lassen sich auch Anbauteile 18 sowie Einbauteile 20, beispielsweise Solarzellen, mit geringem Aufwand in die Formwerkzeuge 12, 14 einsetzen. In Figur 1 ist als Anbauteil 18 unter anderem ein Winkelprofil dargestellt, welches später die Montage oder die Befestigung des Dachelements 10 an einer Fahrzeugkarosserie (nicht gezeigt) oder einem Fahrzeugdach (nicht gezeigt) ermöglicht. Im vorliegenden Ausführungsbeispiel weist das Formwerkzeug 14 eine Ausnehmung 22 auf, die so abgedichtet ist, dass das eingesetzte Anbauteil 18 später nicht vollständig von einem Polyurethanmaterial 26' umschlossen ist, sondern aus dem flächigen Dachelement 10 herausragt (vgl. Figuren 3 und 4).

Nach der Oberflächenbeschichtung der Formwerkzeuge 12, 14 mit der Kratzfest-Beschichtung 16 sowie dem Einbringen optionaler Anbauteile 18 und/oder Einbauteile 20 wird die Werkzeugform geschlossen, d.h. die Formwerkzeuge 12, 14 werden relativ zueinander bewegt, bis sie einen Hohlraum 24 einschließen, der im Wesentlichen der Form des späteren flächigen Dachelements 10 entspricht (vgl. Figur 2).

In einem weiteren Verfahrensschritt gemäß Figur 3 wird der Hohlraum 24 mit einem Polyurethanmaterial 26' gefüllt, welches in den Formwerkzeugen 12, 14 zu einem Polyurethankörper 26 aushärtet und mit der Beschichtung 16 eine Haftverbindung eingeht. Als Polyurethanmaterial 26' wird dabei eine unter hohem Druck hergestellte Mischung der Polyurethan-Ausgangskomponenten Polyol und Isocyanat bezeichnet. Vorzugsweise kommt ein lichtechtes, zähhartes und transparentes 2-Komponenten-Polyurethansystem zum Einsatz, welches zur Herstellung von Formteilen geeignet ist. Eine erste Ausgangskomponente ist beispielsweise ein Gemisch aus Polyolen, Aktivatoren und oberflächenaktiven Substanzen, während die zweite Ausgangskomponente z.B. ein aliphatisches, polyfunktionales Isocyanat ist. Als Kratzfest-Beschichtung 16 wird vorzugsweise ein Lack, beispielsweise ein Polyurethan-Lack verwendet, der mit dem Polyurethanmaterial 26' eine starke Haftverbindung eingeht. Die Haftverbindung zwischen der Beschichtung 16 und dem Polyurethanmaterial 26' ist dabei um Vielfaches höher als die Haftverbindung zwischen der Beschichtung 16 und der Oberfläche der Formwerkzeuge 12, 14. Die Haftverbindung zwischen der Beschichtung 16 und den Formwerkzeugen 12, 14 ist vorzugsweise gerade so stark, dass die Beschichtung 16 beim Einbringen des flüssigen Polyurethanmaterials 26' an den Oberflächen der Formwerkzeuge 12, 14 fixiert bleibt und sich nicht ablöst. Somit kann auch das Ausgangsmaterial für die Beschichtung 16 ein 2-Komponenten-Polyurethansystem sein, das speziell für die Anwendung als "In-Mold-Coating" entwickelt wurde und sich durch eine hohe mechanische Belastbarkeit, Flexibilität und chemische Beständigkeit auszeichnet. Besonders bevorzugt ist diesem 2-Komponenten-Polyurethanlack noch ein Trennmittel als Additiv zugesetzt, so dass ohne den Einsatz eines separaten Trennmittels, das in einem zusätzlichen Verfahrensschritt aufgebracht werden müsste, ein leichtes Lösen aus den Formwerkzeugen 12, 14 möglich ist.

Beim Befüllen des Hohlraums werden auch die eingelegten Anbauteile 18 sowie die eingelegten Einbauteile 20 wenigstens abschnittsweise vom Polyurethanmaterial 26' umschlossen. Die Anbauteile 18 bzw. Einbauteile 20 bilden nach dem Aushärten des Polyurethanmaterials 26' eine Formschlussverbindung mit dem Polyurethankörper 26 aus. Je nach Oberflächenbehandlung der Anbauteile 18 bzw. Einbauteile 20 kann sich zusätzlich auch eine Reibschlussverbindung und/ oder Haftschlussverbindung zum Polyurethankörper 26 ausbilden. In jedem Fall sind die Anbauteile 18 und die Einbauteile 20 sicher am bzw. im Polyurethankörper 26 befestigt.

In einem letzten Verfahrensschritt wird die Werkzeugform geöffnet, d.h. die Formwerkzeuge 12, 14 werden relativ zueinander bewegt, bis der beschichtete Polyurethankörper 26 als fertiges Dachelement 10 entnommen werden kann.

Das entsprechende Fahrzeug-Dachelement 10 ist schematisch in der Schnittzeichnung gemäß Figur 4 dargestellt. Das Dachelement 10 umfasst dabei den flächigen Polyurethankörper 26, der ein mechanisch stabiles Tragelement bildet, und die Beschichtung 16, die zur Verbesserung der Kratzfestigkeit auf den Polyurethankörper 26 aufgebracht ist. Der Polyurethankörper 26 ist aus einem hochtransparenten Glasklar-Polyurethan hergestellt. Auch die Kratzfest-Beschichtung 16, vorzugsweise ein Lack, ist hochtransparent, sodass sich insgesamt ein transparentes Dachelement 10 ergibt.

Gemäß Figur 4 ist eines der Anbauteile 18 in einer randseitigen Vertiefung 28 des Polyurethankörpers 26 aufgenommen und mit dem Polyurethankörper 26 fest verbunden. Besonders bevorzugt schließt das Anbauteil 18 im Wesentlichen bündig mit einer Oberfläche, gemäß Figur 4 mit einer Unterseite, des flächigen Polyurethankörpers 26 ab. Ein derart angeordnetes Anbauteil 18 kann beispielsweise eine Solarzelle sein.

Alternativ können Solarzellen auch als Einbauteile 20 ausgebildet sein, wobei die Einbauteile 20 beim Einbringen in die Formwerkzeuge 12, 14 so im Hohlraum 24 positioniert werden, dass sie beim Einspritzen des Polyurethanmaterials 26' im Wesentlichen vollständig vom Polyurethanmaterial 26' umschlossen werden und später geschützt im Inneren des Polyurethankörpers 26 liegen.

Der flächige Polyurethankörper 26 und damit das gesamte Dachelement 10 kann in Abhängigkeit von den Formwerkzeugen 12, 14 als gekrümmte Schale oder weitgehend ebene Platte ausgebildet sein. Vorzugsweise sind die Formwerkzeuge 12, 14 so ausgebildet, dass sich das Dachelement 10 optisch vorteilhaft der Fahrzeugform bzw. der Dachform des Fahrzeugs anpasst.

Obwohl die Formwerkzeuge 12, 14 in den Figuren 1 bis 3 "liegend" dargestellt sind, also so, dass sich der Hohlraum 24 im Wesentlichen in einer horizontalen Ebene erstreckt, ist es besonders vorteilhaft, wenn die Formwerkzeuge 12, 14 von Beginn an "stehend" angeordnet sind, also so, dass sich der Hohlraum 24 im Wesentlichen vertikal erstreckt. Bei dieser weitgehend vertikalen Ausrichtung der Oberflächen der Formwerkzeuge 12, 14 ist eine Schmutz- oder Staubablagerung und eine dadurch bedingte Beeinträchtigung der Oberflächenqualität weniger wahrscheinlich als bei einer liegenden Ausrichtung. Dadurch reduziert sich der Ausschuss der hergestellten Dachelemente 10.

Eine Drehung der Formwerkzeuge 12, 14 sowie des Dachelements 10 gemäß den Figuren 1 bis 4 um 90° im Uhrzeigersinn vermittelt den Eindruck einer stehenden Dachelement-Fertigung. Gemäß einer bevorzugten Verfahrensvariante dieser stehenden Fertigung wird das Polyurethanmaterial 26' im Bereich eines unteren Hohlraumendes 30 zugeführt, sodass der Hohlraum 24 in Figur 3 von unten nach oben gefüllt wird. In Figur 1 bis 3 ist zum Zwecke der Befüllung des Hohlraums 24 mit Polyurethanmaterial 26' ein Befüllkanal 32 angedeutet. Infolge dieser Befüllung von unten nach oben kann mit geringem Aufwand eine ausgesprochen gute Entlüftung des Hohlraums 24 über Entlüftungskanäle (nicht gezeigt) im Bereich des oberen Hohlraumendes 34 sichergestellt werden. Ein unerwünschter Einschluss von Gasblasen, welche später (insbesondere bei transparenten Dachelementen 10) als störend empfunden werden, ist somit weitgehend verhindert, wodurch der Ausschuss bei der Herstellung der Dachelemente 10 weiter sinkt.

## Patentansprüche

1. Dachelement für Fahrzeuge, mit
einem flächigen Polyurethankörper (26), der ein mechanisch stabiles Tragelement bildet, und
einer Beschichtung (16), die zur Verbesserung der Kratzfestigkeit auf den Polyurethankörper (26) aufgebracht ist.

2. Dachelement nach Anspruch 1, **dadurch gekennzeichnet, dass** der Polyurethankörper (26) und die Beschichtung (16) transparent sind.

3. Dachelement nach Anspruch 1 oder 2, **dadurch gekennzeichnet, dass** der Polyurethankörper (26) im wesentlichen vollständig mit der Beschichtung (16) überzogen ist.

4. Dachelement nach einem der vorhergehenden Ansprüche, **dadurch gekennzeichnet, dass** die Beschichtung (16) ein Lack ist.

5. Dachelement nach einem der vorhergehenden Ansprüche, **dadurch gekennzeichnet, dass** wenigstens ein Anbauteil (18) und/oder Einbauteil (20) vorgesehen ist, das wenigstens teilweise im Polyurethankörper (26) aufgenommen ist.

6. Dachelement nach einem der vorhergehenden Ansprüche, **dadurch gekennzeichnet, dass** wenigstens ein Einbauteil (20) vorgesehen ist, das im wesentlichen vollständig vom Polyurethankörper (26) umschlossen ist.

7. Dachelement nach einem der vorhergehenden Ansprüche, **dadurch gekennzeichnet, dass** wenigstens ein Anbauteil (18) vorgesehen ist, das in einer randseitigen Vertiefung (28) des Polyurethankörpers (26) aufgenommen und mit dem Polyurethankörper (26) fest verbunden ist.

8. Dachelement nach Anspruch 7, **dadurch gekennzeichnet, dass** das wenigstens eine Anbauteil (18) im wesentlichen bündig mit einer Oberfläche des flächigen Polyurethankörpers (26) abschließt.

9. Dachelement nach einem der vorhergehenden Ansprüche, **dadurch gekennzeichnet, dass** der flächige Polyurethankörper (26) eine weitgehend ebene Platte ist.

10. Dachelement nach einem der Ansprüche 1 bis 8, **dadurch gekennzeichnet, dass** der flächige Polyurethankörper (26) eine gekrümmte Schale ist.

11. Verfahren zur Herstellung eines flächigen Dachelements (10) für Fahrzeuge mit folgenden Schritten:
a) es werden relativ zueinander bewegbare Formwerkzeuge (12, 14) bereitgestellt;
b) auf eine Oberfläche wenigstens eines der Formwerkzeuge (12, 14) wird eine Beschichtung (16) mit hoher Kratzfestigkeit aufgetragen;
c) die Formwerkzeuge (12, 14) werden relativ zueinander bewegt, bis sie einen Hohlraum (24) einschließen, der im wesentlichen der Form des späteren flächigen Dachelements (10) entspricht;
d) der Hohlraum wird mit einem Polyurethanmaterial (26') gefüllt, welches in den Formwerkzeugen (12, 14) zu einem Polyurethankörper (26) aushärtet und mit der Beschichtung (16) eine Haftverbindung eingeht;
e) die Formwerkzeuge (12, 14) werden relativ zueinander bewegt, bis der beschichtete Polyurethankörper (26) als fertiges Dachelement (10) entnommen werden kann.

12. Verfahren nach Anspruch 11, **dadurch gekennzeichnet, dass** nach Schritt
a) ein Trennmittel auf eine Oberfläche wenigstens eines der Formwerkzeuge (12, 14) aufgebracht wird.

13. Verfahren nach Anspruch 11 oder 12, **dadurch gekennzeichnet, dass** sich der Hohlraum (24) im Schritt c) im wesentlichen in einer vertikalen Ebene erstreckt, so dass das flächige Dachelement (10) stehend gefertigt wird.

14. Verfahren nach Anspruch 13, **dadurch gekennzeichnet, dass** das Polyurethanmaterial (26') im Bereich eines unteren Hohlraumendes (30) zugeführt wird, so dass der Hohlraum (24) im Schritt d) von unten nach oben gefüllt wird.

15. Verfahren nach einem der Ansprüche 11 bis 14, **dadurch gekennzeichnet, dass** nach Schritt a) oder b) wenigstens ein Anbauteil (18) und/oder Einbauteil (20) in die Formwerkzeuge (12, 14) eingelegt wird, welches in Schritt d) wenigstens abschnittsweise vom Polyurethanmaterial (26') umschlossen wird.

16. Verfahren nach einem der Ansprüche 11 bis 15, **dadurch gekennzeichnet, dass** nach Schritt a) oder b) wenigstens eine Solarzelle in die Formwerkzeuge (12, 14) eingelegt wird.
